# EUROPÄISCHE PATENTSCHRIFT

(11) **EP 3 970 490 B1**
(45) Veröffentlichungstag und Bekanntmachung des Hinweises auf die Patenterteilung: **20.12.2023**
(21) Anmeldenummer: 20196511.8
(22) Anmeldetag: 16.09.2020
(51) Int. Cl.: A01N 33/12, A01N 25/02, A01N 25/30, A01P 1/00

(54) **FLÄCHENDESINFEKTIONSMITTEL MIT VERRINGERTER KLEBRIGKEIT**
SURFACE DISINFECTANT WITH REDUCED TACKINESS
DÉSINFECTANT DE SURFACE À ADHÉSIVITÉ RÉDUITE

(43) Veröffentlichungstag der Anmeldung: 23.03.2022
(73) Patentinhaber: Bode Chemie GmbH, 22525 Hamburg (DE)
(72) Erfinder: HEIDEL, Judith, 25421 Pinneberg (DE); PIETRYGA, Elke, 22301 Hamburg (DE); ECKARDT, Christian, 22869 Schenefeld (DE)
(74) Vertreter: Patentanwälte Olbricht Buchhold Keulertz

(56) Entgegenhaltungen:
- WO-A1-00/71662
- DE-A1- 4 321 566
- DE-A1- 10 028 998
- DE-A1- 10 040 664
- . .: "Microbac forte", Sicherheitsdatenblatt, 23. April 2020 (2020-04-23), Seiten 1-19, XP055777840, Germany Gefunden im Internet: URL:https://www.bode-chemie.de/sida/DE_R11 021.PDF [gefunden am 2021-02-19]
- .: "Flächendesinfektion ohne Alkohol und Aldehyde", Produktinformation, 1. Oktober 2019 (2019-10-01), Seiten 1-12, XP055777849, Germany Gefunden im Internet: URL:https://produktkatalog.bode-chemie.de/ produkte/flaechen/produktblaetter/mikrobac -produkte.pdf [gefunden am 2021-02-19]

## Beschreibung

Die Erfindung betrifft ein Flächendesinfektionsmittelkonzentrat, eine aus dem Konzentrat hergestellte wässrige Anwendungslösung und die nicht-therapeutische Verwendung des Konzentrats beziehungsweise der Anwendungslösung zur Desinfektion unbelebter Oberflächen.

Unbelebte Oberflächen, die mit potenziellen Krankheitserregern besiedelt sind, stellen ein Infektionsrisiko dar. Die Flächendesinfektion zur Prävention einer Keimübertragung ist daher in Gesundheitseinrichtungen und hygienerelevanten Bereichen unerlässlich. Flächenreinigungs- und Desinfektionsmittel werden zur Reinigung und Desinfektion von unbelebten Oberflächen eingesetzt, wie Arbeitsflächen, Böden, abwaschbaren, medizinischen Geräten und Inventar.

Für die prophylaktische Desinfektion unbelebter Oberflächen hat sich der Einsatz aldehydfreier Produkte auf der Basis quaternärer Ammoniumverbindungen (QAVs) bewährt. Flächendesinfektionsmittel mit quartären Ammoniumverbindungen (QAV) und/oder Aminen verfügen über ein toxikologisch gutes Profil, sind geruchsarm und zudem anwenderfreundlich. Ein großer Vorteil liegt darüber hinaus in der hohen Materialverträglichkeit gegenüber alkohol-unbeständigen Oberflächen.

Ein solches Flächendesinfektionsmittel ist aus der DE 43 21 566 A1 bekannt. Die DE 43 21 566 A1 beschreibt ein Desinfektionsmittelkonzentrat, das eine Kombination von QAVs und Alkylamin zusammen mit mehrwertigen wassermischbaren oder wasserlöslichen aliphatischen Alkoholen aufweist. Das Desinfektionsmittel hat eine gute Wirksamkeit gegenüber gramnegativen Bakterien und zeigt gleichzeitig eine hohe Materialverträglichkeit. Es zeigt allerdings auch eine unerwünschte Schaumbildung. Die behandelten Flächen zeigen zudem nach einer höheren Wischzahl ein unerwünschtes Klebeverhalten, insbesondere auf Fußbodenbelägen.

DE 100 40 664 A1 beschreibt Desinfektionsmittelkonzentrate zur maschinellen Instrumentendesinfektion, welche neben einem Gehalt an Wirkstoffen gewählt aus den Gruppen quaternäre Ammoniumverbindungen, Alkylamine, Alkylthiouroniumsalze, α,ω-Alkylendithiouroniumsalze und/oder Gemische derselben, mindestens eine Komplexbildnerkomponente, mindestens ein nichtionisches Tensid und mindestens einen hydrophoben Schaumregulator enthalten. Die Desinfektionsmittelformulierungen mit diesem Konzentrat haben eine bakterizide und fungizide Wirksamkeit.

DE 100 28 998 A1 offenbart ebenfalls ein Reinigungs- und Desinfektionsmittel für medizinische Instrumente. Die flüssigen, aldehydfreien Reinigungs- und Desinfektionssysteme haben einen Gehalt an Tensiden, Korrosionsschutzmitteln und weiteren Zusätzen, die die Reinigung verstärken, sowie ein Alkylamin als ersten mikrobiziden Wirkstoff, eine quaternäre Ammoniumverbindungen als zweiten mikrobiziden Wirkstoff und mindestens eine Aminosäure und/oder ein Aminosäurenderivat.

Aus WO 00/71662 A1 sind rückstandsarme wässrige Zusammensetzungen zur Reinigung und Desinfektion von harten Oberflächen bekannt. Die wässrigen Zusammensetzungen enthalten eine quaternäre Ammoniumverbindung mit keimtötenden Eigenschaften, ein Tensidsystem, ein Lösemittelsystem, das ein Alkylenglykolether-Lösemittel mit einem C1- C6-Alkohol enthält und ein Alkalisierungsmittel wie ein Alkanolamid.

Aufgabe der vorliegenden Erfindung ist es daher, ein Desinfektionsmittel für unbelebte Oberflächen bereitzustellen, dass eine gute antimikrobielle Wirksamkeit bei niedrigen Konzentrationen bei kurzen Einwirkzeiten hat. Das Desinfektionsmittel soll außerdem eine gute Materialverträglichkeit zeigen und auch bei häufigerem Wischen nicht zu einer erhöhten Klebrigkeit der behandelten Oberflächen führen.

Die Aufgabe wird durch ein erfindungsgemäßes Flächendesinfektionsmittelkonzentrat gemäß Patentanspruch 1 gelöst.

Das erfindungsgemäße Flächendesinfektionsmittelkonzentrat enthält
a. eine quaternäre Ammoniumverbindung, bevorzugt Benzalkoniumchlorid,
b. mindestens ein Alkylamin der allgemeinen Formeln I und/oder II 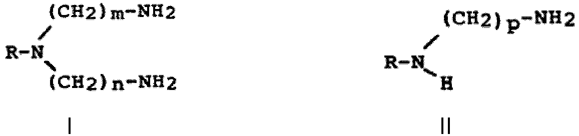 in denen R eine gerade oder verzweigte Alkyl- oder Alkylenkette mit 6 bis 22 C-Atomen, n und m einen Wert von 3 bis 12 und p einen Wert von 2 bis 12 bedeuten,
c. Hilfsstoffe, umfassend
   c.1 mindestens ein Dispergiermittel zie nachfolgend beschrieben,
   c.2 mindestens einen Korrosionsinhibitor bestehend aus einer Mischung von 95 - 100 Gew.-% Phosphorsäure- 2-ethylhexylester und 0 - 5 Gew.-% Phosphorsäure, wobei sich die Bestandteile der Phosphorsäureester/Phosphorsäure-Mischung zu 100 Gew.-% ergänzen,
   c.3 mindestens einen Entschäumer, bevorzugt eine Butyltriglykolether-Mischung in Mischung mit N-(2-ethylhexyl)isononan-1-amid,
   c.4 mindestens ein pH-Stellmittel ausgewählt aus Ameisensäure, Essigsäure, Propionsäure, Zitronensäure, Apfelsäure, Weinsäure oder deren Salze, und
   c.5 ggf. weitere Hilfsstoffe, und
d. Wasser,
wobei das Konzentrat mindestens die Komponenten a, b, c.1, c.2, c.3, c.4 und d enthält.

Bevorzugt enthält das erfindungsgemäße Desinfektionsmittelkonzentrat als Wirkstoffe
a. Benzalkoniumchlorid und
b. N-(3-Aminopropyl)-N'-dodecyl-1,3-Propandiamin (Laurylamindipropylendiamin).

Das erfindungsgemäße Desinfektionsmittelkonzentrat enthält in einer bevorzugten Ausführungsform
c.1 0,05 - 3 Gew.-%, bevorzugt 0,1 - 3 Gew.-% besonders bevorzugt 0,1 - 1,0 Gew.-% Dispergiermittel wie nachfolgend beschrieben,
c.2 0,15 - 5 Gew.-%, bevorzugt 0,2 - 4,8 Gew. - %, besonders bevorzugt 0,75 - 1,5 Gew.-% Korrosionsinhibitor,
c.3 0,1 - 2 Gew.-%, bevorzugt 0,2 - 1 Gew.-%, besonders bevorzugt 0,25 - 0,75 Gew.-% Entschäumer und
c.4 0,5 - 3 Gew.-%, bevorzugt 0,5 - 2,5 Gew.-%, besonders bevorzugt 1,0 - 2,0 Gew.-% pH-Stellmittel,
wobei die Mengenangaben jeweils bezogen sind auf die Gesamtmenge des Konzentrats.

Eine besonders bevorzugte Zusammensetzung des Desinfektionsmittelkonzentrats enthält
c.1 0,1 - 1,0 Gew.-% Dispergiermittel wie nachfolgend beschrieben,
c.2 0,75 - 1,5 Gew.-% der Mischung von 95 - 100 Gew.-% Phosphorsäure- 2-ethylhexylester (Isomermischung) und 0 - 5 Gew.-% Phosphorsäure (Korrosionsinhibitor),
c.3 0,25 - 0,75 Gew.-% Entschäumer und
c.4 1,0 - 2,0 Gew.-% Zitronensäure oder Zitronensäure-Monohydrat (pH-Stellmittel),
wobei die Mengenangaben jeweils bezogen sind auf die Gesamtmenge des Konzentrats.

Die Gew.-% Angaben sind jeweils auf den Inhaltsstoff bezogen. Bevorzugt werden erfindungsgemäß bei der Herstellung der Desinfektionsmittelkonzentrate handelsübliche Produkte verwendet, die den Inhaltsstoff teilweise in wässriger Lösung, d.h. verdünnt, enthalten. So wird z.B. N-(3-Aminopropyl)-N'-dodecyl-1,3-Propandiamin unter der Bezeichnung Lonzabac 12.100 von der Fa. Lonza Ltd. vertrieben und enthält 98,5 % Inhaltsstoff und 1,5 % Wasser.

Erfindungsgemäss ist das Dispergiermittel ein Polyaminomethylenphosphonat-Derivat gemäß der allgemeinen Formel 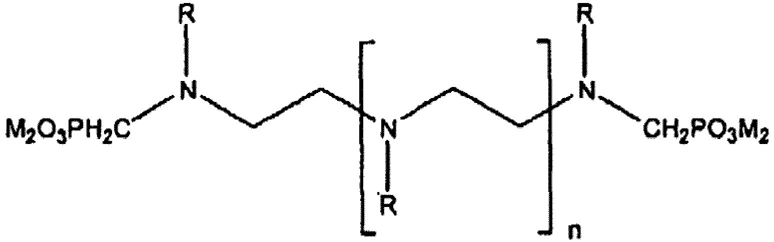
wobei "n" > 2 ist;
wobei M ein Wasserstoff oder ein geeignetes Kation, wie ein Alkalimetall oder Ammonium, ist; wobei jede R-Gruppe, gleich oder unterschiedlich, unabhängig ausgewählt ist aus:
   1. -CH₂PO₃M₂;
   2. -CH₂R¹ mit R¹ ausgewählt aus -CH₂OH, -CHOHCH₃, -CHOHCH₂Cl, -CHOHCH₂OH;
   3. -(CH₂)ₘSO₃M, wobei m gleich 3 oder 4 ist;
   4. -CH₂CH₂R² mit R² gleich -CONH₂, -CHO, -COOR³, -COOX oder CN, wobei R³ entweder -CH₃ oder -C₂H₅ ist und X ein Kation ausgewählt aus M ist.

In dieser Hinsicht wird Bezug genommen auf die Patentanmeldungen WO 2004/011475 A1 und WO 2005/073130 A1. Geeignete Dispergiermittel werden beispielsweise unter der Bezeichnung Hydrodis ADW 3814/N, Hydrodis WP 56/N oder Hydrodis WP 56/S von Polygon Chemie AG vertrieben.

Der Korrosionsinhibitor ist ein Gemisch von 95 - 100 Gew.-% Phosphorsäure- 2-ethylhexylester (als Isomermischung; CAS-Nummer 12645-31-7) mit 0 - 5 Gew.-% Phosphorsäure, bevorzugt 95 - 99 Gew.-% Phosphorsäure- 2-ethylhexylester und 1 bis 5 Gew.-% Phosphorsäure. An allen Stellen, an denen der Korrosionsinhibitor beschrieben wird, ist die bevorzugte Ausführungsform jeweils eine Mischung von 95 - 99 Gew.-% Phosphorsäure- 2-ethylhexylester und 1 bis 5 Gew.-% Phosphorsäure, auch wenn dieses nicht explizit genannt wird. Dieses Gemisch kann vorteilhafterweise auch antistatisch, reinigend und netzend wirken.

Der Entschäumer ist bevorzugt eine Butyltriglykolethermischung, d.h. eine Mischung von Tri-, Tetra- und Pentaethylenglycolmonobutylethern (CAS-Nummer 161907-77-3) in Mischung mit N-(2-Ethylhexyl)isononan-1-amid (CAS-Nummer 93820-33-8), wie es unter der Bezeichnung PREVOL^{®}3470 von der Fa. Clariant Produkte GmbH vertrieben wird.

Besonders bevorzugt ist das Dispergiermittel ein Polyaminomethylenphosphonat-Derivat wie vorstehend beschrieben, der Korrosionsinhibitor ein Gemisch von 95 - 100 Gew.-% Phosphorsäure- 2-ethylhexylester und 0 - 5 Gew.-% Phosphorsäure, der Entschäumer eine Mischung von Tri-, Tetra- und Pentaethylenglycolmonobutylethern in Mischung mit N-(2-ethylhexyl)isononan-1-amid und das pH-Stellmittel Zitronensäure oder Zitronensäure-Monohydrat. Zitronensäure-Monohydrat enthält pro Molekül Zitronensäure ein Molekül Kristallwasser.

Wichtig ist die Einstellung des pH-Wertes des Konzentrats auf einen Wert zwischen 6 bis 11,5 und vorzugsweise 7 bis 9,5. Zur pH-Einstellung werden physiologisch unbedenkliche organische Säuren ausgewählt aus Ameisensäure, Essigsäure, Propionsäure, Zitronensäure, Zitronensäure-Monohydrat, Apfelsäure oder Weinsäure eingesetzt. Das pH-Stellmittel ist bevorzugt Zitronensäure oder Zitronensäure-Monohydrat. Bei einem pH-Wert von 7 bis 9,5 sind die Konzentrate hervorragend materialverträglich, auch in Hinblick auf Metalle und empfindliche Kunststoffe.

Das erfindungsgemäße Desinfektionsmittelkonzentrat enthält als Wirkstoffe bevorzugt
a. 5 - 40 Gew.-%, vorzugsweise 15 - 25 Gew.-% quaternäre Ammoniumverbindung, bevorzugt Benzalkoniumchlorid, und
b. 1 - 15 Gew.-%, vorzugsweise 2,5 - 7,5 Gew.-% Alkylamin, bevorzugt N-(3-Aminopro-pyl)-N'-dodecyl-1,3-Propandiamin, das auch als Laurylamindipropylendiamin bezeichnet wird,
wobei die Mengenangaben jeweils auf die Gesamtmenge des Konzentrats bezogen sind.

Besonders bevorzugt enthält das Desinfektionsmittelkonzentrat als Wirkstoffe demnach
a. 15 - 25 Gew.-% Benzalkoniumchlorid und
b. 2,5 - 7,5 Gew.-% N-(3-Aminopropyl)-N'-dodecyl-1,3-Propandiamin,
wobei die Mengenangaben jeweils auf die Gesamtmenge des Konzentrats bezogen sind.

In einer bevorzugten Ausführungsform enthält das erfindungsgemäße Desinfektionsmittelkonzentrat
a. 5 - 40 Gew.-%, vorzugsweise 15 - 25 Gew.-% Benzalkoniumchlorid,
b. 1 - 15 Gew.-%, vorzugsweise 2,5 - 7,5 Gew.-% N-(3-Aminopropyl)-N'-dodecyl-1,3-Pro-pandiamin,
c.1 0,05 - 3 Gew.-%, bevorzugt 0,1 - 1,0 Gew.-% Dispergiermittel wie vorstehend beschrieben,
c.2 0,15 - 5 Gew.-%, bevorzugt 0,75 - 1,5 Gew.-% der Mischung von 95 - 100 Gew.-% Phosphorsäure- 2-ethylhexylester (Isomermischung) und 0 - 5 Gew.-% Phosphorsäure, wobei sich die Bestandteile der Mischung zu 100 Gew.-% ergänzen,
c.3 0,1 - 2 Gew.-%, bevorzugt 0,2 - 1 Gew.-%, besonders bevorzugt 0,25 - 0,75 Gew.-% Entschäumer, und
c.4 0,5 - 3 Gew.-%, bevorzugt 0,5 - 2,5 Gew.-%, besonders bevorzugt 1,0 - 2,0 Gew.-% pH-Stellmittel,
wobei die Mengenangaben jeweils bezogen sind auf die Gesamtmenge des Konzentrats.

Das erfindungsgemäße Desinfektionsmittelkonzentrat enthält bevorzugt keine Aldehyde. Weiter bevorzugt enthält das erfindungsgemäße Desinfektionsmittel keine Milchsäure und kein Glycerol (Propan-1,2,3-triol). Das erfindungsgemäße Desinfektionsmittelkonzentrat enthält weiterhin bevorzugt keine nichtionischen Tenside, insbesondere keine Fettsäurepolyglykolether.

In einer weiteren bevorzugten Ausführungsform besteht das erfindungsgemäße Desinfektionsmittelkonzentrat aus
a. 5 - 40 Gew.-%, bevorzugt 15 - 25 Gew.-% Benzalkoniumchlorid,
b. 1,0 - 15 Gew.-%, bevorzugt 2,5 - 7,5 Gew.-% N-(3-Aminopropyl)-N'-dodecyl-1,3-Pro-pandiamin,
c.1 0,05 - 3 Gew.-%, bevorzugt 0,1 - 1 Gew.-% Dispergiermittel wie vorstehend beschrieben,
c.2 0,15 - 5 Gew.-%, bevorzugt 0,75 - 1,5 Gew.-% der Mischung von 95 - 100 Gew.-% Phosphorsäure- 2-ethylhexylester und 0 - 5 Gew.-% Phosphorsäure, wobei sich die Bestandteile der Mischung zu 100 Gew.-% ergänzen,
c.3 0,1 - 2 Gew.-%, bevorzugt 0,25 - 0,75 Gew.-% Entschäumer,
c.4 0,5 - 3 Gew.-%, bevorzugt 1,0 - 2,0 Gew.-% pH-Stellmittel,
c.5 0 - 1,0 Gew.-% Duftstoff und
d. Wasser,
wobei sich die Komponenten zu 100 Gew.-% ergänzen. Dabei kann bevorzugt vorgesehen sein, dass die weitere Hilfsstoffkomponente c.5 (der Duftstoff) nicht vorhanden ist. Gegenstand der Erfindung ist weiterhin eine wässrige Anwendungslösung, die aus dem erfindungsgemäßen Desinfektionsmittelkonzentrat durch Mischen mit Wasser hergestellt wird. Die erfindungsgemäße wässrige Anwendungslösung enthält 0,1 bis 10 Gew-%, bevorzugt 0,1 bis 5 Gew.-%, besonders bevorzugt 0,25 bis 2 Gew.-% des erfindungsgemäßen Desinfektionsmittelkonzentrats wie vorstehend beschrieben und Wasser. Bevorzugt besteht die erfindungsgemäße Anwendungslösung aus einer Mischung des erfindungsgemäßen Desinfektionsmittelkonzentrats mit Wasser.

Weiterhin ist Gegenstand der Erfindung die Verwendung des erfindungsgemäßen Desinfektionsmittelkonzentrats oder der erfindungsgemäßen Anwendungslösung zur Desinfektion von unbelebten Oberflächen, bevorzugt zur Reduktion von wenigstens einem der Mikroorganismen *P*. *aeruginosa, E. hirae, C. albicans, E. coli* und *S*. *aureus.*

Das erfindungsgemäße Desinfektionsmittelkonzentrat bzw. die erfindungsgemäße Anwendungslösung bewirkt mindestens eine log 4 Reduktion innerhalb von 15 Minuten gegenüber *C*. *albicans* und log 5 Reduktion gegenüber *P*. *aeruginosa* gemäß den Standardmethoden der VAH Methode 9 (Stand 2015) im quantitativen Suspensionsversuch.

Die Verwendung der erfindungsgemäßen Konzentrate erfolgt in einer Konzentration von 0,1 bis 10 Gew.-% in gebrauchsfertigen Lösungen durch Verdünnen mit Wasser. Die Anwendungslösungen sind nicht nur als Flächen- und Instrumentendesinfektionsmittel im Klinikbereich geeignet, sondern können auch im industriellen Bereich, beispielsweise in der Nahrungsmittelindustrie, in der Klimatechnik usw., eingesetzt werden. Sie werden zur Desinfektion von unbelebten Oberflächen eingesetzt, wie abwaschbare Flächen (gem. BPR), z. B. Arbeitsflächen in Kliniken, ärztlichen und zahnärztlichen Praxen, Alten- und Pflegeheimen, Rettungswagen, medizinischen Laboren und Sanitätshäusern, aber auch im Großküchen- und Lebensmittelbereich.

Die mit den erfindungsgemäßen Desinfektionsmittelkonzentraten hergestellten Anwendungslösungen zeigen ein gutes Abtrocknungsverhalten, d.h. nach dem Auftragen auf eine Oberfläche verbleiben beim Trocknen nur sehr wenige oder keine sichtbaren Rückstände zurück. Eigene Versuche haben gezeigt, dass je mehr Rückstände auf einer gewischten Oberfläche vorhanden sind, desto wahrscheinlicher ist es, dass das entsprechende Desinfektionsmittelprodukt einen großen Klebeeffekt hervorruft. In der Praxis bedeutete dieses, je öfters dieselbe Person über die gewischte und dann getrocknete Fläche läuft, desto intensiver klebt die Fläche.

Mit dem erfindungsgemäßen Desinfektionsmittel behandelte Oberflächen weisen eine deutlich geringere Klebrigkeit auf als mit dem in DE 43 21 566 A1 beschriebenen Desinfektionsmittel behandelte Oberflächen. Die erfindungsgemäße Rezeptur zeigt einen deutlich niedrigeren Klebeeffekt und in der Praxis wird das Kleben deutlich verringert, selbst wenn dieselbe Person öfters über die gewischte und dann getrocknete Fläche läuft.

Die Ermittlung des Klebeverhaltens erfolgt mit Testflächen, die in definierter Weise mehrfach mit den erfindungsgemäßen Desinfektionsmittelkonzentraten in wässriger Lösung gewischt werden. Nach einer definierten Anzahl von Wischzyklen wurde dann die Klebrigkeit der gewischten Oberfläche durch Messung der Adhäsionskraftveränderung getestet. Hierzu wird die Adhäsionskraft zwischen einer Testfläche (PVC) und einer Schuhsohle (PU) gemessen. Die Schuhsohle wird hierfür 20 sec mit 3,5 kg auf die Testfläche gedrückt und mit einer Ziehgeschwindigkeit von 30 mm/sec gelöst. Es wird die Kraft gemessen, die benötigt wird, um die Schuhsohle von der Fläche abzulösen. Je mehr Kraft benötigt wird, um die Schuhsohle abzulösen, desto kleberiger sind die Rückstände bzw. die verwendete Anwendungslösung.

Die mit dem erfindungsgemäßen Desinfektionsmittel hergestellte Anwendungslösung zeigt auch eine verbesserte Reinigungsleistung. Dieses war so nicht zu erwarten, da das erfindungsgemäße Desinfektionsmittelkonzentrat keine üblicherweise als Tenside eingesetzten Hilfsstoffe enthält.

Überraschenderweise ist die Schaumfähigkeit des erfindungsgemäßen Desinfektionsmittelkonzentrats selbst bei einer 2 %igen Anwendungslösung trotz eines Entschäumer-Anteils von maximal 2 Gew.-% im Desinfektionsmittelkonzentrat gering. Es erfolgt nahezu keine Schaumbildung und bei Messungen des Schaumverhaltens ist bereits der Null-Minuten-Wert sehr niedrig. Das erfindungsgemäße Desinfektionsmittelkonzentrat ist auch in hoher Konzentration von 2 % in der Anwendungslösung schaumarm. Dieses wird durch die Kombination von Entschäumer und Dispergiermittel erreicht. Auch die Abwesenheit von Fettalkoholpolyglykolethern beeinflusst das Schaumverhalten positiv.

Das erfindungsgemäße Desinfektionsmittel zeigt eine gute Materialverträglichkeit sowohl gegenüber empfindlichen Kunststoffen, wie Polycarbonat oder Polymethylmethacrylat (PMMA), als auch gegenüber Metallen. Dieses erlaubt eine unkomplizierte desinfizierende Reinigung einer Vielzahl hygienerelevanter Flächen und reduziert die Gefahr von Materialschäden.

Gleichzeitig verfügt das Desinfektionsmittel über eine breite und zuverlässige Wirksamkeit gegenüber den häufigsten Erregern *wie P. aeruginosa* und *S*. *aureus.*

Bei einer Desinfektion von unbelebten Oberflächen mit dem erfindungsgemäßen Desinfektionsmittelkonzentrat bzw. der erfindungsgemäßen Anwendungslösung konnte eine deutlich verringerte Klebrigkeit der Oberflächen auch bei einer hohen Zahl (min. 100) von Wischvorgängen gegenüber herkömmlichen Produkten beobachtet werden. Überraschenderweise besitzt das erfindungsgemäße Produkt neben der geringeren Klebrigkeit auch einen besseren Reinigungseffekt. Das erfindungsgemäße Produkt schäumt zudem weniger und trocknet besser ab. Diese Vorteile des erfindungsgemäßen Desinfektionsmittels ergeben sich aus der neuartigen und vorliegend als erfindungswesentlich angesehenen Hilfsstoffkombination (anspruchsgemäße Komponenten c.1 bis c.4). Dabei wirken die Hilfsstoffe in unerwarteter und überraschender Weise synergistisch zusammen, um die beschriebenen Vorteile zu erzeugen.

### Beispiele

Es wurden Desinfektionsmittelkonzentrate mit folgenden Zusammensetzungen hergestellt und ihre antimikrobielle Wirksamkeit und ihre Anwendungseigenschaften getestet.

### 1. Herstellung der Konzentrate

Es wurden Konzentrate mit den in den folgenden Tabellen angegebenen Zusammensetzungen hergestellt. Der erste Schritt der Herstellung umfasste das Vorlegen des Wassers in einem geeigneten Gefäß. Im nächsten Schritt wurden die Wirkstoffe unter Rühren zugesetzt. Im letzten Schritt wurden die Hilfsstoffe zugesetzt und gerührt, bis eine klare Lösung entstand, die das Konzentrat darstellt. Aus diesen Konzentraten wurden Anwendungsverdünnungen mit Wasser hergestellt und die Anwendungsteste durchgeführt.

**Tabelle 1: Rezepturen der hergestellten Desinfektionsmittelkonzentrate**

| **Rohstoff** | | **Menge in [%]** |
|---|---|---|
| | **Vergleichsbeispiel V1 (gemäß Stand der Technik)** | **Beispiel 1** |
| Benzalkoniumchlorid (50 % in Wasser) | 40 | 40 |
| Lonzabac 12.100^{a} | 5,2 | 5,2 |
| Milchsäure | 3 | -- |
| Glycerol 85% | 6 | -- |
| Isotridecanolethoxylat | 2,5 | -- |
| Nichtionisches Tensid (Fettalkoholpolyglykolether) | 2,5 | -- |
| 1H-Benzotriazol | 0,2 | -- |
| PREVOL 3470^{c} | 0,7 | 0,5 |
| Duftstoff | 0,3 | -- |
| Hydrodis WP 56/N^{b} | -- | 0,5 |
| Tensan TEO^{d} | -- | 1,00 |
| Zitronensäure-Monohydrat | -- | 1,3 |
| Wasser | ad 100 | ad 100 |
| Gesamt [%] | 100,00 | 100,00 |

| | | |
|---|---|---|
| ^{a} N-(3-aminopropyl)-N-dodecylpropane-1,3-diamine (enthält 98,5% Inhaltsstoffe und 1,5 %Wasser), Hersteller Lonza Ltd. ^{b} oligomere Phosphonsäure, Hersteller Polygon Chemie AG ^{c} Butyltriglykolether-Mischung in Mischung mit N-(2-ethylhexyl)isononan-1-amid, Hersteller Clariant ^{d} Mischung von 95 - 99 Gew.-% Phosphorsäure- 2-ethylhexylester mit 1- 5 Gew.-% Phosphorsäure, Hersteller Polygon Chemie | | |

### 2. Abtrocknungsverhalten

Es wurde untersucht, ob und wie viele Rückstände die Anwendungslösungen beim Trocknen auf einer Glasplatte hinterlassen. Hierzu wurde eine Glasplatte (10 cm × 10 cm) diagonal in ein 2 Liter Becherglas gestellt. Die Testlösung wurde in eine Sprühpumpe gefüllt und 15 Sprühhübe verworfen. Anschließend wurde jede Seite der Glasplatte mit 5 Sprühhüben der Testlösung besprüht. Die Glasplatte wurde aus dem Becherglas herausgenommen und senkrecht stehend getrocknet. Nach der Trocknung wurde die Glasplatte optisch auf Rückstände untersucht.

**Tabelle 2 Ergebnisse Abtrocknungsverhalten einer 0,5 %igen Anwendungslösung**

| | V1 | Beispiel 1 |
|---|---|---|
| Abtrocknung | -- | ++ |
| pH-Wert Anwendungslösung | 8,18 | 8,34 |

| | | |
|---|---|---|
| -- sehr schlecht (sehr viele Rückstände) - schlecht (viele Rückstände) + gut (wenige Rückstände) ++ sehr gut (keine oder nur sehr wenige Rückstände) | | |

Es zeigt sich, dass das erfindungsgemäße Desinfektionsmittelkonzentrat in wässriger Lösung ein deutlich verbessertes Abtrocknungsverhalten zeigt und deutlich weniger Rückstände beobachtet werden konnten.

### 3. Reinigungsleistung

Die Bestimmung der Reinigungsleistung wurde vom wfk-Institut für Angewandte Forschung GmbH in Anlehnung an die IKW-Empfehlungen zur Qualitätsbewertung für Allzweckreiniger (SÖFW-Journal | 141 | 4-2015) durchgeführt. Der Schmutz wurde nach Vorgaben der IKW-Methode als konzentrierte Stammlösung hergestellt und über einen Zeitraum eines Monats bei Raumtemperatur in einem geschlossenen Gefäß ohne Lichteinfluss gealtert. Zur Anwendung wurden anschließend 20 % des Schmutzes unter Rühren mit 80 % Isopropanol verdünnt.

Die Fliesen wurden vor der Anschmutzung von Herstellungsrückständen befreit und anschließend mit Alkohol abgerieben und getrocknet. Der verdünnte Schmutz wurde durch Aufsprühen mittels einer Airbrushpistole in gleichmäßigen Schichten auf eine reinweiße, glasierte Fußbodenfliese auf einer Fläche von 8 cm x 26 cm (208 cm²) mittels einer Schablone aufgesprüht. Die aufgebrachte Schmutzmenge betrug 0,35 g ± 0,02 g pro Fliese. Alle angeschmutzten Fliesen wurden anschließend bei definierter Zeit und Temperatur im Umlufttrockenschrank eingebrannt und über weitere 24 Stunden bei Raumtemperatur konditioniert.

Die Untersuchung der Reinigungsleistung erfolgte mit Hilfe eines automatischen Mehrspurwischgerätes (Sheen Wet Abrasion Scrub Tester Ref. 903/PG) durch Wischen mit einem Tuch (Wecovi Tücher) auf das je 5 ml Prüfsubstanz aufpipettiert wurde. In Vorversuchen wurde eine geeignete Anzahl Wischhübe ermittelt, die eine deutliche Differenzierung zwischen den Testprodukten ermöglichte. 15 Wischhübe wurden als geeignete Anzahl ermittelt. Die Wischgeschwindigkeit betrug 20 Hübe/ Minute (1 Hub = Hin- und Rückbewegung).

Die Fliesennachbehandlung erfolgte mit fließendem kaltem Wasser (14 dH, 15°C, mäßiger Sprühstrahl) mit konstanter Wasserhärte sofort nach der Reinigung. Die anschließende Trocknungszeit betrug eine Stunde aufrechtstehend bei Raumtemperatur. Insgesamt wurde jedes Produkt in vier Paralleltests (Versuche) geprüft, wobei die Produkte jedes Mal auf einer anderen Spur des Mehrspurwischgerätes eingesetzt wurden.

Die Bestimmung der Reinigungsleistung erfolgte durch visuelle Abmusterung. Diese wurde von einem Panel von fünf Personen durchgeführt. Die Reinigungsleistung jeder gereinigten Spur wurde visuell anhand der 10-stufigen IKW-Fotoskala bewertet. Die Zusammenfassung der Ergebnisse erfolgte bei den ermittelten Ergebnissen nach DIN 53 804 Teil 3. Der Median mit oberem und unterem Vertrauensbereich von 95 % wurde berechnet. Statistische Unterschiede wurden mit einem paarweisen Vergleich nach Mann-Whitney-Wilcoxon mit 95 % statistischer Sicherheit bestimmt.

**Tabelle 3 Visuell ermittelte Reinigungsergebnisse, 2,0 % ige Anwendungslösung Die beste Note ist 10 und entspricht einer Reinigungsleistung von 100 %. Die schlechteste Note ist 0 und entspricht einer Reinigungsleistung von 0 %.**

| | V1 | Beispiel 1 |
|---|---|---|
| Reinigungsleistung | 6 6/5 | 7 7/6 |
| | 72% | 81,60% |
| Rangig | 2 | 1 |

Die mit dem erfindungsgemäßen Desinfektionsmittel hergestellte Anwendungslösung zeigt auch eine verbesserte Reinigungsleistung.

### 4. Klebeverhalten

Zur Ermittlung des Klebeverhaltens wurden Prüflinge zunächst in definierter Weise mehrfach mit den erfindungsgemäßen Desinfektionsmittelkonzentraten in wässriger Lösung gewischt. Nach einer bestimmten Anzahl von Wischzyklen wurde dann die Klebrigkeit der gewischten Oberfläche getestet.

Die Wischmethode dient dazu einen gleichmäßigen und standardisierten Auftrag der Testlösung auf der Testfläche zu gewährleisten. In einer Wischmaschine (Material-Prüfmaschine) mit Testfläche, Stempel als Wischarm mit Motor, am Wischstempel befestigtes Wischtuch und Vorratsbehälter wurde die vorher angesetzte Anwendungslösung (ca. 150 - 200 ml) in den Vorratsbehälter gegeben. Die Maschine wurde gestartet, so dass der Wischstempel das Wischtuch befeuchtet und über die Testfläche führt, es wurde mit 50 Wiederholungen gestartet (eine Wiederholung beinhaltete 2 Wischzyklen). Die Maschine führt 100 Wischzyklen durch. Nach jedem Wischvorgang muss die gewischte Fläche trocken sein. Durch diese Methode wurden ca. 0,5 g pro Wischzyklus auf die Fläche aufgebracht und getrocknet. Somit war die durchschnittliche Aufbringungsmenge der unterschiedlichen Testlösungen identisch.

Durch die Klebkraftmethode kann die Adhäsionskraftveränderung gemessen werden. Hierzu wird die Adhäsionskraft zwischen Testfläche (PVC) und einer Schuhsohle (PU) gemessen.

Zur Bestimmung des Blindwerts wurde die Schuhsohle 20 Sekunden lang mit 3,5 kg auf die Testfläche gedrückt und mit einer Ziehgeschwindigkeit von 30 mm/sec gelöst. Es wurde die Kraft gemessen, die benötigt wird, um die Schuhsohle von der Fläche abzulösen.

Anschließend wurde die Testfläche mit einer definierten Aufbringungsmenge an Testlösung (ca. 0,5 g / Wischzyklus somit 50 g / 100 Wischzyklen) wie oben beschrieben gewischt. Auf dieser gewischten Testfläche wurde durch die Klebkraftmethode die Adhäsionskraft zwischen Testfläche (PVC) und Rückstand der Testlösung auf dieser Fläche sowie Schuhsohle (PU) und Rückstand der Testlösung auf der Schuhsohle gemessen. Hierzu wurde die Schuhsohle 20 Sekunden lang mit 3,5 kg auf die gewischte Fläche gedrückt und mit einer Ziehgeschwindigkeit von 30 mm/sec gelöst. Es wurde die Kraft gemessen, die benötigt wird, um die Schuhsohle von der gewischten Fläche abzulösen. Je mehr Kraft benötigt wird, um die Schuhsohle abzulösen, desto klebriger sind die Rückstände bzw. die Rezeptur. Die Maschine zur Klebkraftbestimmung führte an der gewischten Testfläche nacheinander 100 Messungen durch (d.h. die 100 Messungen wurden nach den 100 Wischzyklen inklusive Trocknung durchgeführt), um das Klebeverhalten an der Schuhsohle beim Laufen über einen gewischten Boden zu simulieren. Dieser Versuch wird mit unterschiedlichen Luftfeuchtigkeiten wiederholt.

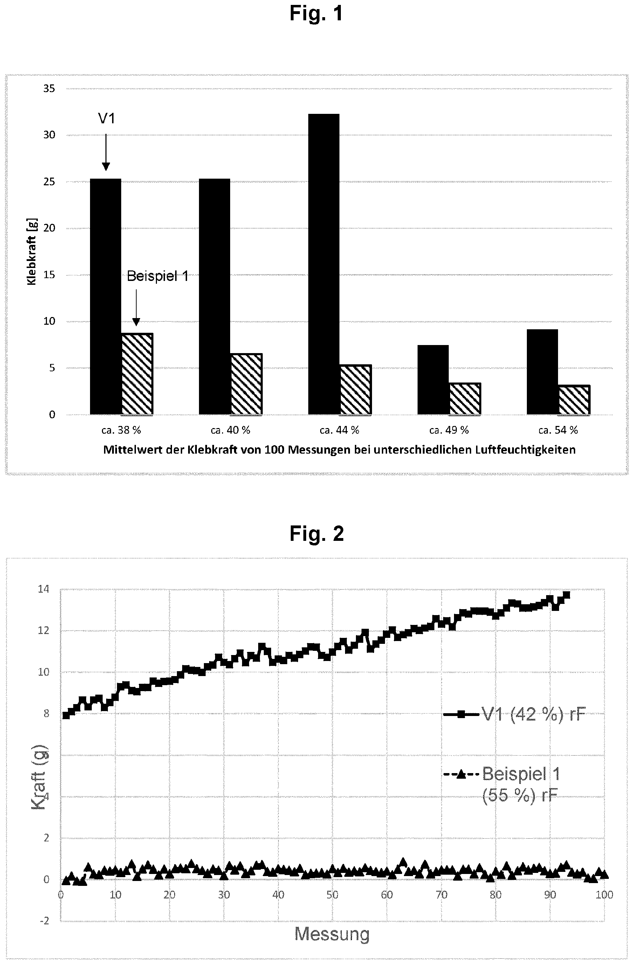

Es wurde herausgefunden, dass die Luftfeuchtigkeit bei der Durchführung der Klebkraftmethode eine Rolle spielt. Je nach Rezeptur bzw. Inhaltsstoffe kann die Klebkraft bei unterschiedlicher Luftfeuchtigkeit deutlich unterschiedlich sein. Aus diesem Grund werden die Klebkraftversuche bei 5 unterschiedlichen Luftfeuchtigkeiten durchgeführt. Figur 1 zeigt die Ergebnisse des Klebkraftverhalten bei gleichen Luftfeuchtigkeiten in einer 2 %igen Lösung von Beispiel 1 und Vergleichsbeispiel V1. Während die Klebkraft von Beispiel 1 bei einer Luftfeuchtigkeit von etwa 38 % am höchsten ist, zeigt V1 bei ca. 44 % Luftfeuchtigkeit die höchste Klebrigkeit. Die weiteren Messungen wurden jeweils bei der Luftfeuchtigkeit gemessen, die die höchste Klebrigkeit aufweist.

Figur 2 zeigt die Klebkraft der 0,5 %igen Anwendungslösungen von Beispiel 1 und V1 im Vergleich. Anhand der Figur 2 (0,5 %ige Anwendungslösung, Standardeinsatzkonzentration zur routinemäßigen Reinigung) ist festzustellen, dass die mit Lösung gemäß Vergleichsbeispiel 1 behandelte Fläche eine stetig steigende Kurve aufweist. Daher wird der Klebeeffekt höher. In der Praxis bedeutete dieses, je öfters dieselbe Person über die gewischte und dann getrocknete Fläche läuft, desto intensiver klebt die Fläche. Zusätzlich ist zu erkennen, dass der Klebeeffekt deutlich höher als bei der erfindungsgemäßen Rezeptur liegt. Die erfindungsgemäße Rezeptur zeigt einen deutlich niedrigeren Klebeeffekt und die Kurve ist deutlich flacher, was darauf hinweist, dass in der Praxis das Kleben deutlich verringert wird, selbst wenn dieselbe Person öfters über die gewischte und dann getrocknete Fläche läuft.

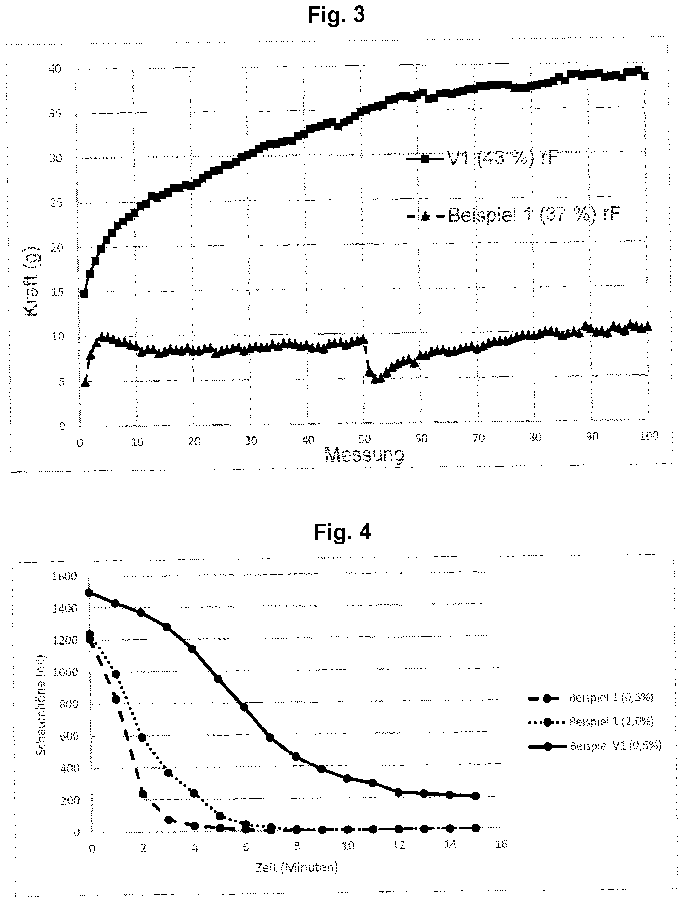

Figur 3 zeigt die Klebkraft der 2 %igen Anwendungslösungen von Beispiel 1 und V1 im Vergleich. Auch bei der höheren Konzentration zeigt die mit dem erfindungsgemäßen Desinfektionsmittelkonzentrat hergestellte Anwendungslösung eine deutlich geringere Klebrigkeit.

### 5. Schaumverhalten

Die Bestimmung der Schaumstabilität wurde mit einem Schaumprüfgerät (Zylinder mit Pumpe) durchgeführt. Hierfür wurden 500 ml der Testlösung vorsichtig ohne Schaumentstehung mit einem Messbecher oder Becherglas in den Zylinder gefüllt. Der Zylinder mit der Testlösung wurde dann zunächst mindestens 15 Minuten in ein auf 25 °C temperiertes Wasserbad gestellt. Nach dieser Temperierzeit wurde der Verschluss des Steigrohrs der Pumpe entfernt und die Pumpe mit einer Pumpentaktung von 80 für maximal 5 Minuten angeschaltet. Sobald jedoch die Schaumhöhe ≥ 1500 ml war, wurde die Pumpe vorzeitig abgeschaltet und die Pumpenzeit notiert. Nach Abschalten der Pumpe wurde die Schaumhöhe minütlich dokumentiert. Fig. 4 zeigt die Ergebnisse der Bestimmung der Schaumstabilität für das Desinfektionsmittel nach Beispiel 1 im Vergleich zu Vergleichsbeispiel V1. Es wurden 0,5 %ige und 2,0 %ige Anwendungslösungen getestet.

Überraschenderweise ist die Schaumfähigkeit des erfindungsgemäßen Desinfektionsmittelkonzentrats selbst bei einer 2 %igen Anwendungslösung geringer als die von Vergleichsbeispiel 1 bei einer 0,5 %igen Anwendungslösung. Obwohl der Anteil des Entschäumers in Beispiel 1 etwas verringert ist, schäumt die Rezeptur weniger als beim Vergleichsprodukt. Es zeigt sich, dass die Schaumbildung und nicht nur der Schaumverlauf niedriger ist, da jeweils der Null-Minuten-Wert deutlich erniedrigt ist. Somit kann die Aussage getroffen werden, dass das erfindungsgemäße Desinfektionsmittelkonzentrat schaumärmer als V1 ist.

### 6. Mikrobizide Wirksamkeit

Die Bestimmung der Wirkung gegen einzelne Bakterien und Pilze erfolgt im quantitativen Suspensionsversuch nach der Standardmethode der VAH Methode 9 (Stand 2015). Diese beschreiben ein Prüfverfahren sowie die Mindestanforderungen an die Wirkung von chemischen Desinfektionsmitteln und anti-septischen Produkten zur Feststellung, ob ein Antiseptikum im Rahmen des im Anwendungsbereich beschriebenen Arbeitsgebiets und Feldes eine ausreichende Wirkung aufweist oder nicht. Die Differenzierung zwischen niedriger und hoher organischer Belastung bei Produktprüfung ist ebenfalls zu entnehmen.

**Tabelle 4: Reduktionsfaktoren von x%igen Anwendungslösungen gegenüber Pseudomonas aeruginosa nach VAH, geringe organische Belastung**

| | | **V1** | **Beispiel 1** |
|---|---|---|---|
| | | Reduktionsfaktor | Reduktionsfaktor |
| **Konzentration [%]** | **0,05** | | |
| Zeit [min] | 5 | <1,64 | <1,64 |
| | 15 | 2,12 | 3,46 |
| | 30 | 2,94 | 4,84 |
| | 60 | 4,07 | 6,15 |

| **Konzentration [%]** | **0,10** | | |
|---|---|---|---|
| Zeit [min] | 5 | 3,78 | 5,53 |
| | 15 | 5,95 | ≥ 7,15 |
| | 30 | ≥ 7,16 | ≥ 7,16 |
| | 60 | ≥ 7,15 | ≥ 7,15 |

| **Konzentration [%]** | **0,25** | | |
|---|---|---|---|
| Zeit [min] | 5 | ≥ 7,16 | ≥ 7,16 |
| | 15 | ≥ 7,15 | ≥ 7,15 |
| | 30 | ≥ 7,16 | ≥ 7,16 |
| | 60 | ≥ 7,15 | ≥ 7,15 |

| **Konzentration [%]** | **0,5** | | |
|---|---|---|---|
| Zeit [min] | 5 | ≥ 7,16 | ≥ 7,16 |
| | 15 | ≥ 7,15 | ≥ 7,15 |
| | 30 | nd | nd |
| | 60 | nd | nd |

**Tabelle 5: Reduktionsfaktoren von x%igen Anwendungslösungen gegenüber Pseudomonas aeruginosa nach VAH, hohe organische Belastung (0,3% Albumin, 0,3% Schafserythrozyten)**

| | | **V1** | **Beispiel 1** |
|---|---|---|---|
| | | Reduktionsfaktor | Reduktionsfaktor |
| **Konzentration [%]** | **0,1** | | |
| Zeit [min] | 5 | <1,60 | <1,60 |
| | 15 | <1,66 | <1,66 |
| | 30 | 1,80 | 2,28 |
| | 60 | 5,20 | 3,08 |

| **Konzentration [%]** | **0,25** | | |
|---|---|---|---|
| Zeit [min] | 5 | 2,04 | 5,24 |
| | 15 | 3,96 | ≥ 7,18 |
| | 30 | 5,06 | ≥ 7,15 |
| | 60 | 5,90 | ≥ 7,13 |

| **Konzentration [%]** | **0,5** | | |
|---|---|---|---|
| Zeit [min] | 5 | ≥ 7,12 | ≥ 7,12 |
| | 15 | ≥ 7,18 | ≥ 7,18 |
| | 30 | ≥ 7,15 | ≥ 7,15 |
| | 60 | ≥ 7,13 | ≥ 7,13 |

| **Konzentration [%]** | **1,0** | | |
|---|---|---|---|
| Zeit [min] | 5 | ≥ 7,12 | ≥ 7,12 |
| | 15 | ≥ 7,18 | ≥ 7,18 |
| | 30 | nd | nd |
| | 60 | nd | nd |

**Tabelle 6: Reduktionsfaktoren von x%igen Anwendungslösungen gegenüber Candida albicans nach VAH, geringe organische Belastung**

| | | **V1** | **Beispiel 1** |
|---|---|---|---|
| | | Reduktionsfaktor | Reduktionsfaktor |
| **Konzentration [%]** | **0,05** | | |
| Zeit [min] | 5 | <1,65 | <1,65 |
| | 15 | <1,66 | <1,66 |
| | 30 | 1,90 | 3,66 |
| | 60 | 4,73 | >6,18 |

| **Konzentration [%]** | **0,10** | | |
|---|---|---|---|
| Zeit [min] | 5 | <1,65 | <1,65 |
| | 15 | 2,15 | 4,70 |
| | 30 | 4,97 | >6,17 |
| | 60 | >6,18 | >6,18 |

| **Konzentration [%]** | **0,25** | | |
|---|---|---|---|
| Zeit [min] | 5 | 5,06 | >6,17 |
| | 15 | >6,18 | >6,18 |
| | 30 | >6,17 | >6,17 |
| | 60 | >6,18 | >6,18 |

| **Konzentration [%]** | **0,5** | | |
|---|---|---|---|
| Zeit [min] | 5 | >6,17 | >6,17 |
| | 15 | >6,18 | >6,18 |
| | 30 | nd | nd |
| | 60 | nd | nd |

**Tabelle 7: Reduktionsfaktoren von x%igen Anwendungslösungen gegenüber Candida albicans nach VAH, hohe organische Belastung (0,3% Albumin, 0,3% Schafserythrozyten)**

| | | **V1** | **Beispiel 1** |
|---|---|---|---|
| | | Reduktionsfaktor | Reduktionsfaktor |
| **Konzentration [%]** | **0,1** | | |
| Zeit [min] | 5 | <1,85 | <1,85 |
| | 15 | <1,85 | <1,85 |
| | 30 | <1,88 | <1,88 |
| | 60 | <1,83 | <1,83 |

| **Konzentration [%]** | **0,25** | | |
|---|---|---|---|
| Zeit [min] | 5 | <1,85 | <1,85 |
| | 15 | <1,85 | 2,11 |
| | 30 | 2,43 | 4,07 |
| | 60 | 4,75 | >6,35 |

| **Konzentration [%]** | **0,5** | | |
|---|---|---|---|
| Zeit [min] | 5 | <1,85 | 2,52 |
| | 15 | 3,24 | 4,96 |
| | 30 | 5,29 | >6,40 |
| | 60 | >6,35 | >6,35 |

| **Konzentration [%]** | **1,0** | | |
|---|---|---|---|
| Zeit [min] | 5 | 4,35 | >6,37 |
| | 15 | >6,37 | >6,37 |
| | 30 | nd | nd |
| | 60 | nd | nd |

Das erfindungsgemäße Desinfektionsmittelkonzentrat zeigt auch in geringen Konzentrationen in der Anwendungslösung nach 15 min die erforderliche Reduktion der log 4 Reduktion bei dem Prüfkeim *C. albicans,* so dass die Levurozidie belegt ist, und der log 5 Reduktion bei dem Prüfkeim *P. aeruginosa,* so dass die Bakterizidie belegt ist.

## Patentansprüche

1. Flächendesinfektionsmittelkonzentrat, enthaltend
a. eine quaternäre Ammoniumverbindung,
b. mindestens ein Alkylamin der allgemeinen Formeln I und/oder II 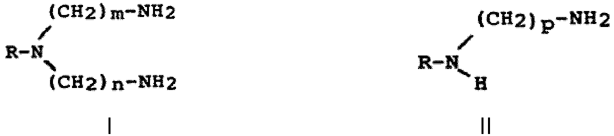 in denen R eine gerade oder verzweigte Alkyl- oder Alkylenkette mit 6 bis 22 C-Atomen, n und m einen Wert von 3 bis 12 und p einen Wert von 2 bis 12 bedeuten,
c. Hilfsstoffe, umfassend
c.1 mindestens ein Dispergiermittel,
c.2 mindestens einen Korrosionsinhibitor bestehend aus einer Mischung von 95 - 100 Gew.-% Phosphorsäure- 2-ethylhexylester und 0 - 5 Gew.-% Phosphorsäure, wobei sich die Bestandteile der Mischung zu 100 Gew.-% ergänzen,
c.3 mindestens einen Entschäumer,
c.4 mindestens ein pH-Stellmittel ausgewählt aus Ameisensäure, Essigsäure, Propionsäure, Zitronensäure, Apfelsäure, Weinsäure oder deren Hydrate und Salze, und
c.5 ggf. weitere Hilfsstoffe, und
d. Wasser,
wobei das Konzentrat mindestens die Komponenten a, b, c.1, c.2, c.3, c.4 und d enthält und
wobei das Dispergiermittel ein Polyaminomethylenphosphonat-Derivat ist gemäß der allgemeinen Formel 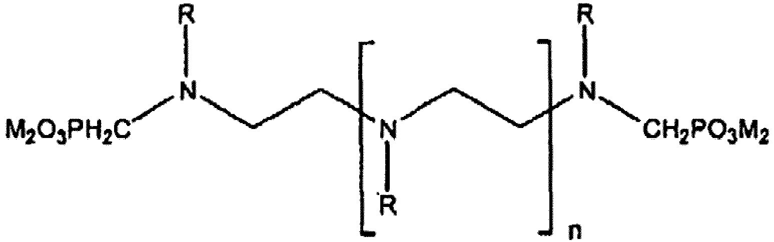
wobei "n" > 2 ist;
wobei M ein Wasserstoff oder ein geeignetes Kation, wie ein Alkalimetall oder Ammonium, ist;
wobei jede R-Gruppe, gleich oder unterschiedlich, unabhängig ausgewählt ist aus:
1. -CH₂PO₃M₂;
2. -CH₂R¹ mit R¹ ausgewählt aus -CH₂OH, -CHOHCH₃, -CHOHCH₂Cl, -CHOHCH₂OH;
3. -(CH₂)ₘSO₃M, wobei m gleich 3 oder 4 ist;
4. -CH₂CH₂R² mit R² gleich -CONH₂, -CHO, -COOR³, -COOX oder CN, wobei R³ entweder -CH₃ oder -C₂H₅ ist und X ein Kation ausgewählt aus M ist.

2. Desinfektionsmittelkonzentrat nach Patentanspruch 1, **dadurch gekennzeichnet, dass** das Konzentrat enthält
0,05 - 3 Gew.-%, bevorzugt 0,1 - 3 Gew.-% Dispergiermittel,
0,15 - 5 Gew.-%, bevorzugt 0,2 - 4,8 Gew.-% Korrosionsinhibitor,
0,1 - 2 Gew.-%, bevorzugt 0,2 - 1 Gew.-% Entschäumer, und
0,5 - 3 Gew.-%, bevorzugt 0,5 - 2,5 Gew.-% pH-Stellmittel,
wobei die Mengenangaben jeweils bezogen sind auf die Gesamtmenge des Konzentrats.

3. Desinfektionsmittelkonzentrat nach einem der vorhergehenden Patentansprüche,
**dadurch gekennzeichnet, dass** der Entschäumer eine Butyltriglykolether-Mischung in Mischung mit N-(2-ethylhexyl)isononan-1-amid ist.

4. Desinfektionsmittelkonzentrat nach einem der vorhergehenden Patentansprüche,
**dadurch gekennzeichnet, dass** das pH-Stellmittel Zitronensäure oder Zitronensäure-Monohydrat ist.

5. Desinfektionsmittelkonzentrat nach einem der vorhergehenden Patentansprüche,
**dadurch gekennzeichnet, dass** das Desinfektionsmittelkonzentrat keine Milchsäure und kein Glycerol enthält.

6. Desinfektionsmittelkonzentrat nach einem der vorhergehenden Patentansprüche,
**dadurch gekennzeichnet, dass** das Desinfektionsmittelkonzentrat enthält
5 - 40 Gew.-%, bevorzugt 15 - 25 Gew.-% quaternäre Ammoniumverbindung, bevorzugt Benzalkoniumchlorid, und
1 - 15 Gew.-%, vorzugsweise 2,5 - 7,5 Gew.-% Alkylamin, bevorzugt N-(3-Aminopro-pyl)-N'-dodecyl-1,3-Propandiamin,
wobei die Mengenangaben jeweils bezogen sind auf die Gesamtmenge des Konzentrats.

7. Desinfektionsmittelkonzentrat nach einem der vorhergehenden Patentansprüche,
**dadurch gekennzeichnet, dass** das Desinfektionsmittelkonzentrat enthält
5 - 40 Gew.-%, bevorzugt 15 - 25 Gew.-% Benzalkoniumchlorid,
1 - 15 Gew.-%, bevorzugt 2,5 - 7,5 Gew.-% N-(3-Aminopropyl)-N'-dodecyl-1,3-Pro-pandiamin,
0,05 - 3 Gew.-%, bevorzugt 0,1 - 1,0 Gew.-% Dispergiermittel,
0,15 - 5 Gew.-%, bevorzugt 0,75 - 1,5 Gew.-% der Mischung von 95 - 100 Gew.-% Phosphorsäure- 2-ethylhexylester und 0 - 5 Gew.-% Phosphorsäure, wobei sich die Bestandteile der Mischung zu 100 Gew.-% ergänzen,
0,1 - 2 Gew.-%, bevorzugt 0,2 - 1 Gew.-%, besonders bevorzugt 0,25 - 0,75 Gew.-% Entschäumer, und
0,5 - 3 Gew.-%, bevorzugt 0,5 - 2,5 Gew.-%, besonders bevorzugt 1,0 - 2,0 Gew.-% pH-Stellmittel,
wobei die Mengenangaben jeweils bezogen sind auf die Gesamtmenge des Konzentrats.

8. Desinfektionsmittelkonzentrat nach einem der vorhergehenden Patentansprüche,
**dadurch gekennzeichnet, dass** der pH-Wert des Konzentrats 6 bis 11,5, bevorzugt 7 bis 9,5 beträgt.

9. Desinfektionsmittelkonzentrat nach einem der vorhergehenden Patentansprüche,
**dadurch gekennzeichnet, dass** das Desinfektionsmittelkonzentrat besteht aus
a. 5 - 40 Gew.-%, bevorzugt 15 - 25 Gew.-% Benzalkoniumchlorid,
b. 1,0 - 15 Gew.-%, bevorzugt 2,5 - 7,5 Gew.-% N-(3-Aminopropyl)-N'-dodecyl-1,3-Propandiamin,
c.1 0,05 - 3 Gew.-%, bevorzugt 0,1 - 1 Gew.-% Dispergiermittel,
c.2 0,15- 5 Gew.-%, bevorzugt 0,75 - 1,5 Gew.-% der Mischung von 95 - 100 Gew.-% Phosphorsäure- 2-ethylhexylester (Isomermischung) und 0 - 5 Gew.-% Phosphorsäure, bevorzugt 95 - 99 Gew.-% Phosphorsäure- 2-ethylhexylester und 1 bis 5 Gew.-% Phosphorsäure, wobei sich die Bestandteile der Mischung zu 100 Gew.-% ergänzen,
c.3 0,1 - 2 Gew.-%, bevorzugt 0,25 - 0,75 Gew.-% Entschäumer,
c.4 0,5 - 3 Gew.-%, bevorzugt 1,0 - 2,0 Gew.-% pH-Stellmittel,
c.5 0 - 1,0 Gew.-% Duftstoff und
d. Wasser,
wobei sich die Komponenten zu 100 Gew.-% ergänzen.

10. Desinfektionsmittelkonzentrat gemäß einem der vorhergehenden Ansprüche, **dadurch gekennzeichnet, dass** das Desinfektionsmittelkonzentrat keine Aldehyde enthält.

11. Wässrige Anwendungslösung, enthaltend 0,1 bis 10 Gew-%, bevorzugt 0,1 bis 5 Gew.-%, besonders bevorzugt 0,25 bis 2 Gew.-% des Desinfektionsmittelkonzentrats gemäß einem der vorhergehenden Patentansprüche und Wasser.

12. Nicht-therapeutische Verwendung des Desinfektionsmittelkonzentrats gemäß einem der Patentansprüche 1 bis 10 oder der Anwendungslösung gemäß Anspruch 11 zur Desinfektion von unbelebten Oberflächen.

13. Verwendung nach Anspruch 12, **dadurch gekennzeichnet, dass** das Desinfektionsmittelkonzentrat oder die Anwendungslösung zur Reduktion von wenigstens einem der Mikroorganismen *P. aeruginosa, E. hirae, C. albicans, E. coli* und *S. aureus* verwendet wird.

## Claims

1. Surface disinfectant concentrate comprising
a. a quaternary ammonium compound,
b. at least one alkylamine of the general formula I and/or II 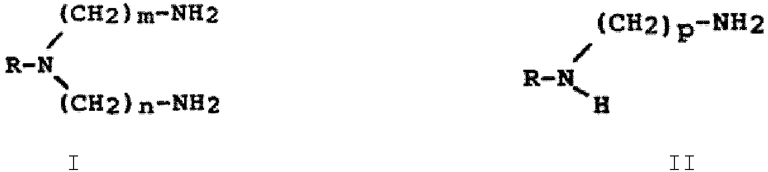 in which R is a straight or branched alkyl or alkylene chain having 6 to 22 carbon atoms, n and m are a value from 3 to 12 and p is a value from 2 to 12,
c. auxiliaries comprising
c.1 at least one dispersant,
c.2 at least one corrosion inhibitor consisting of a mixture of 95-100% by weight of 2-ethylhexyl phosphate and 0-5% by weight of phosphoric acid, the constituents of the mixture adding up to 100% by weight,
c.3 at least one defoamer,
c.4 at least one pH modifier selected from formic acid, acetic acid, propionic acid, citric acid, malic acid, tartaric acid or hydrates and salts thereof, and
c.5 optionally further auxiliaries, and
d. water,
where the concentrate contains at least the components a, b, c.1, c.2, c.3, c.4 and d and
where the dispersant is a polyaminomethylenephosphonate derivative according to the general formula 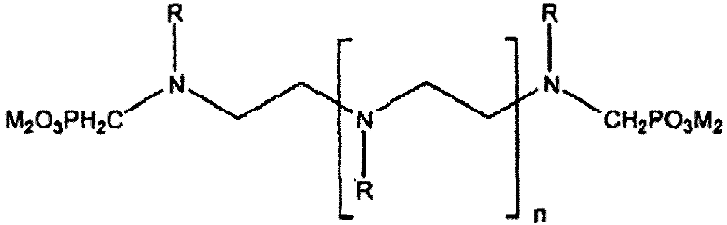
where "n" is > 2;
where M is a hydrogen or a suitable cation, such as an alkali metal or ammonium;
where each group R, identically or differently, is independently selected from:
1. -CH₂PO₃M₂;
2. -CH₂R¹ with R¹ selected from -CH₂OH, -CHOHCH₃, - CHOHCH₂Cl, -CHOHCH₂OH;
3. -(CH₂)ₘSO₃M, where m is 3 or 4;
4. -CH₂CH₂R² with R² as -CONH₂, -CHO, -COOR³, -COOX or CN, where R³ is either -CH₃ or -C₂H₅ and X is a cation selected from M.

2. Disinfectant concentrate according to Claim 1, **characterized in that** the concentrate contains
0.05-3%, preferably 0.1-3%, by weight of dispersant,
0.15-5%, preferably 0.2-4.8%, by weight of corrosion inhibitor,
0.1-2%, preferably 0.2-1%, by weight of defoamer, and
0.5-3%, preferably 0.5-2.5%, by weight of pH modifier, the quantity figures being based in each case on the total amount of the concentrate.

3. Disinfectant concentrate according to either of the preceding claims, **characterized in that** the defoamer is a butyl triglycol ether mixture mixed with N-(2-ethylhexyl)isononan-1-amide.

4. Disinfectant concentrate according to any of the preceding claims, **characterized in that** the pH modifier is citric acid or citric acid monohydrate.

5. Disinfectant concentrate according to any of the preceding claims, **characterized in that** the disinfectant concentrate contains no lactic acid and no glycerol.

6. Disinfectant concentrate according to any of the preceding claims, **characterized in that** the disinfectant concentrate contains
5-40%, preferably 15-25%, by weight of quaternary ammonium compound, preferably benzalkonium chloride, and
1-15%, preferably 2.5-7.5%, by weight of alkylamine, preferably N-(3-aminopropyl)-N'-dodecyl-1,3-propanediamine,
the quantity figures being based in each case on the total amount of the concentrate.

7. Disinfectant concentrate according to any of the preceding claims, **characterized in that** the disinfectant concentrate contains
5-40%, preferably 15-25%, by weight of benzalkonium chloride,
1-15%, preferably 2.5-7.5%, by weight of N-(3-aminopropyl)-N'-dodecyl-1,3-propanediamine,
0.05-3%, preferably 0.1-1.0%, by weight of dispersant,
0.15-5%, preferably 0.75-1.5%, by weight of the mixture of 95-100% by weight of 2-ethylhexyl phosphate and 0-5% by weight of phosphoric acid, the constituents of the mixture adding up to 100% by weight,
0.1-2%, preferably 0.2-1%, more preferably 0.25-0.75% by weight of defoamer, and
0.5-3%, preferably 0.5-2.5%, more preferably 1.0-2.0% by weight of pH modifier,
the quantity figures being based in each case on the total amount of the concentrate.

8. Disinfectant concentrate according to any of the preceding claims, **characterized in that** the pH of the concentrate is 6 to 11.5, preferably 7 to 9.5.

9. Disinfectant concentrate according to any of the preceding claims, **characterized in that** the disinfectant concentrate consists of
a. 5-40%, preferably 15-25%, by weight of benzalkonium chloride,
b. 1.0-15%, preferably 2.5-7.5%, by weight of N-(3-aminopropyl)-N'-dodecyl-1,3-propanediamine,
c.1 0.05-3%, preferably 0.1-1.0%, by weight of dispersant,
c.2 0.15-5%, preferably 0.75-1.5%, by weight of the mixture of 95-100% by weight of 2-ethylhexyl phosphate (isomer mixture) and 0-5% by weight of phosphoric acid, preferably 95-99% by weight of 2-ethylhexyl phosphate and 1% to 5% by weight of phosphoric acid, the constituents of the mixture adding up to 100% by weight,
c.3 0.1-2%, preferably 0.25-0.75%, by weight of defoamer,
c.4 0.5-3%, preferably 1.0-2.0%, by weight of pH modifier,
c.5 0-1.0% by weight of fragrance and
d. water,
the components adding up to 100% by weight.

10. Disinfectant concentrate according to any of the preceding claims, **characterized in that** the disinfectant concentrate contains no aldehydes.

11. Aqueous application solution containing 0.1% to 10%, preferably 0.1% to 5%, more preferably 0.25% to 2% by weight of the disinfectant concentrate according to any of the preceding claims and water.

12. Non-therapeutic use of the disinfectant concentrate according to any of Claims 1 to 10 or of the application solution according to Claim 11 for disinfecting inanimate surfaces.

13. Use according to Claim 12, **characterized in that** the disinfectant concentrate or the application solution is used for reducing at least one of the microorganisms *P*. *aeruginosa, E. hirae, C. albicans, E. coli* and *S. aureus.*

## Revendications

1. Concentré désinfectant de surface, contenant
a. un composé de l'ammonium quaternaire,
b. au moins une alkylamine de Formules générales I et/ou II 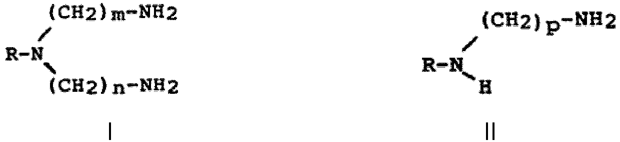 dans lesquelles R représente une chaîne alkyle ou alkylène droite ou ramifiée ayant 6 à 22 atomes de carbone, n et m une valeur de 3 à 12 et p une valeur de 2 à 12,
c. des adjuvants, comprenant
c.1 au moins un dispersant,
c.2 au moins un inhibiteur de corrosion constitué d'un mélange de 95 à 100 % en poids de l'ester 2-éthylhexylique de l'acide phosphorique et de 0 à 5 % en poids d'acide phosphorique, la somme des constituants du mélange étant de 100 % en poids,
c.3 au moins un antimoussant,
c.4 au moins un agent d'ajustement du pH choisi parmi l'acide formique, l'acide acétique, l'acide propionique, l'acide citrique, l'acide malique, l'acide tartrique ou leurs hydrates et sels, et
c.5 éventuellement d'autres adjuvants, et
d. de l'eau,
le concentré contenant au moins les composants a, b, c.1, c.2, c.3, c.4 et d, et
le dispersant étant un dérivé de polyaminométhylènephosphonate de Formule générale 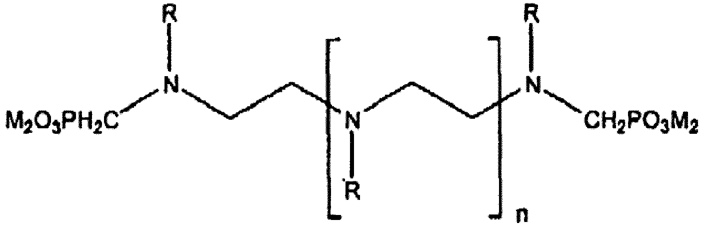
dans laquelle « n » > 2 ;
M étant un hydrogène ou un cation approprié, tel qu'un métal alcalin ou l'ammonium ;
chaque groupe R, identique ou différent, étant indépendamment choisi parmi :
1. -CH₂PO₃M₂ ;
2. -CH₂R¹, R¹ étant choisi parmi -CH₂OH, -CHOHCH₃, - CHOHCH₂Cl, -CHOHCH₂OH ;
3. -(CH₂)ₘSO₃M, m étant égal à 3 ou 4 ;
4. -CH₂CH₂R², R² étant égal à -CONH₂, -CHO, -COOR³, -COOX ou CN, R³ représentant -CH₃ ou -C₂H₅ et X étant un cation choisi parmi M.

2. Concentré désinfectant selon la revendication 1, **caractérisé en ce que** le concentré contient
0,05 à 3 % en poids, de préférence 0,1 à 3 % en poids d'un dispersant,
0,15 à 5 % en poids, de préférence 0,2 à 4,8 % en poids d'un inhibiteur de corrosion,
0,1 à 2 % en poids, de préférence 0,2 à 1 % en poids d'un antimoussant, et
0,5 à 3 % en poids, de préférence de 0,5 à 2,5 % en poids d'un agent d'ajustement du pH,
les pourcentages en masse étant chacun rapportés à la quantité totale du concentré.

3. Concentré désinfectant selon l'une des revendications précédentes, **caractérisé en ce que** l'antimoussant est un mélange de butyltriglycoléther en mélange avec du N-(2-éthylhexyl)isononan-1-amide.

4. Concentré désinfectant selon l'une des revendications précédentes, **caractérisé en ce que** l'agent d'ajustement du pH est l'acide citrique ou l'acide citrique monohydraté.

5. Concentré désinfectant selon l'une des revendications précédentes, **caractérisé en ce que** le concentré désinfectant ne contient pas d'acide lactique et ne contient pas de glycérol.

6. Concentré désinfectant selon l'une des revendications précédentes, **caractérisé en ce que** le concentré désinfectant contient
5 à 40 % en poids, de préférence 15 à 25 % en poids d'un composé de l'ammonium quaternaire, de préférence le chlorure de benzalkonium, et
1 à 15 % en poids, de préférence 2,5 à 7,5 % en poids d'une alkylamine, de préférence la N-(3-aminopropyl)-N'-dodécyl-1,3-propanediamine,
les pourcentages en masse étant chacun rapportés à la quantité totale du concentré.

7. Concentré désinfectant selon l'une des revendications précédentes, **caractérisé en ce que** le concentré désinfectant contient
5 à 40 % en poids, de préférence 15 à 25 % en poids de chlorure de benzalkonium,
1 à 15 % en poids, de préférence 2,5 à 7,5 % en poids de N-(3-aminopropyl)-N'-dodécyl-1,3-propanediamine,
0,05 à 3 % en poids, de préférence 0,1 à 1,0 % en poids d'un dispersant,
0,15 à 5 % en poids, de préférence 0,75 à 1,5 % en poids du mélange de 95 à 100 % en poids de l'ester 2-éthylhexylique de l'acide phosphorique et de 0 à 5 % en poids d'acide phosphorique, la somme des constituants du mélange étant de 100 % en poids,
0,1 à 2 % en poids, de préférence 0,2 à 1 % en poids, d'une manière particulièrement préférée 0,25 à 0,75 % en poids d'un antimoussant, et
0,5 à 3 % en poids, de préférence 0,5 à 2,5 % en poids, d'une manière particulièrement préférée 1,0 à 2,0 % en poids d'un agent d'ajustement du pH,
les pourcentages en masse étant chacun rapportés à la quantité totale du concentré.

8. Concentré désinfectant selon l'une des revendications précédentes, **caractérisé en ce que** le pH du concentré est de 6 à 11,5, de préférence de 7 à 9,5.

9. Concentré désinfectant selon l'une des revendications précédentes, **caractérisé en ce que** le concentré désinfectant est constitué de
a. 5 à 40 % en poids, de préférence 15 à 25 % en poids de chlorure de benzalkonium,
b. 1,0 à 15 % en poids, de préférence 2,5 à 7,5 % en poids de N-(3-aminopropyl)-N'-dodécyl-1,3-propanediamine,
c.1 0,05 à 3 % en poids, de préférence 0,1 à 1 % en poids d'un dispersant,
c.2 0,15 à 5 % en poids, de préférence 0,75 à 1,5 % en poids du mélange de 95 à 100 % en poids de l'ester 2-éthylhexylique de l'acide phosphorique (mélange d'isomères) et de 0 à 5 % en poids d'acide phosphorique, de préférence de 95 à 99 % en poids de l'ester 2-éthylhexylique de l'acide phosphorique et de 1 à 5 % en poids d'acide phosphorique, la somme des constituants du mélange étant de 100 % en poids,
c.3 0,1 à 2 % en poids, de préférence 0,25 à 0,75 % en poids d'un antimoussant,
c.4 0,5 à 3 % en poids, de préférence 1,0 à 2,0 % en poids d'un agent d'ajustement du pH,
c.5 0 à 1,0 % en poids d'un parfum et
d. de l'eau,
la somme des composants étant de 100 % en poids.

10. Concentré désinfectant selon l'une des revendications précédentes, **caractérisé en ce que** le concentré désinfectant ne contient pas d'aldéhydes.

11. Solution aqueuse d'utilisation, contenant 0,1 à 10 % en poids, de préférence 0,1 à 5 % en poids, d'une manière particulièrement préférée 0,25 à 2 % en poids du concentré désinfectant selon l'une des revendications précédentes, et de l'eau.

12. Utilisation non thérapeutique du concentré désinfectant selon l'une des revendications 1 à 10 ou de la solution d'utilisation selon la revendication 11 pour la désinfection de surfaces inanimées.

13. Utilisation selon la revendication 12, **caractérisée en ce que** le concentré désinfectant ou la solution d'utilisation est utilisé pour la réduction d'au moins l'un des microorganismes *P. aeruginosa, E. hirae, C. albicans, E. coli* et *S. aureus.*
